# EUROPÄISCHE PATENTSCHRIFT

(11) **EP 3 156 838 B1**
(45) Veröffentlichungstag und Bekanntmachung des Hinweises auf die Patenterteilung: **24.03.2021**
(21) Anmeldenummer: 16193665.3
(22) Anmeldetag: 13.10.2016
(51) Int. Cl.: G02B 21/00, G01N 21/64, G02B 5/30, G02B 5/32

(54) **SCANNERKOPF UND VORRICHTUNG MIT SCANNERKOPF**
SCANNER HEAD AND DEVICE WITH SCANNER HEAD
TÈTE DE SCANNER ET DISPOSITIF DOTÉ DE TÈTE DE SCANNER

(30) Priorität: 14.10.2015 EP 15189728
(43) Veröffentlichungstag der Anmeldung: 19.04.2017
(73) Patentinhaber: Abberior Instruments GmbH, 37077 Göttingen (DE)
(72) Erfinder: Fischer, Joachim, 76131 Karlsruhe (DE); Henrich, Matthias, 69117 Heidelberg (DE); Donnert, Gerald, 37077 Göttingen (DE); Reuss, Matthias, 37083 Göttingen (DE)
(74) Vertreter: REHBERG HÜPPE + PARTNER

(56) Entgegenhaltungen:
- WO-A1-2010/133678
- US-A1- 2010 014 156
- MAHOU PIERRE ET AL: "Stimulated emission depletion microscopy to study amyloid fibril formation", PROGRESS IN BIOMEDICAL OPTICS AND IMAGING, SPIE - INTERNATIONAL SOCIETY FOR OPTICAL ENGINEERING, BELLINGHAM, WA, US, Bd. 9331, 9. März 2015 (2015-03-09), Seiten 93310U-93310U, XP060049278, ISSN: 1605-7422, DOI: 10.1117/12.2079320 ISBN: 978-1-5106-0027-0
- "SPCM-AQRH Single Photon Counting Module", , 31. Januar 2013 (2013-01-31), XP055263519, Gefunden im Internet: URL:http://physics111.lib.berkeley.edu/Phy sics111/Reprints/QIE/SPCMAQRH.pdf [gefunden am 2016-04-07]
- Frederik Görlitz ET AL: "A STED Microscope Designed for Routine Biomedical Applications", Progress In Electromagnetics Research, 15. Juni 2014 (2014-06-15), Seiten 57-68, XP055263312, Gefunden im Internet: URL:http://www.jpier.org/PIER/pier147/04.1 4042708.pdf [gefunden am 2016-04-06]
- 200 Microtime: "Super-resolution add-on for the confocal time-resolved microscopy platform", , 5. Oktober 2015 (2015-10-05), XP055329436, Gefunden im Internet: URL:http://www.picoquant.com/images/upload s/downloads/microtime200_sted_webseite_05. 10.15_web.pdf [gefunden am 2016-12-15]
- PicoQuant: "MicroTime 200 - demonstration of single molecule microscopy", Youtube, 26 February 2013 (2013-02-26), page 1 pp., XP054979829, Retrieved from the Internet: URL:https://www.youtube.com/watch?v=YkC4ZH Qy5Nc [retrieved on 2019-10-21]

## Beschreibung

### TECHNISCHES GEBIET DER ERFINDUNG

Die Erfindung bezieht sich auf einen Scannerkopf für hochauflösende Scanning-Fluoreszenzmikroskopie mit den Merkmalen des Oberbegriffs des unabhängigen Patentanspruchs 1. Weiterhin bezieht sich die Erfindung auf eine Vorrichtung zum Aufrüsten eines Lichtmikroskops zur einem hochauflösenden Scanning-Fluoreszenzmikroskop mit einem solchen Scannerkopf.

Unter hochauflösender Scanning-Fluoreszenzmikroskopie wird hier Scanning-Fluoreszenzmikroskopie, wie insbesondere Laser-Scanning-Mikroskopie, verstanden, bei der eine Probe mit einem fokussierten Lichtstrahl nicht nur abgetastet wird, um sie zur Emission von Fluoreszenzlicht anzuregen, das dann registriert und der jeweiligen Lage des fokussierten Lichtstrahls in der Probe zugeordnet wird, sondern bei dem ein Teil des fokussierten Lichtstrahls dazu dient, den räumlichen Bereich, aus dem das für die jeweilige Lage des fokussierten Lichtstrahls in der Probe registrierte Fluoreszenzlicht stammt, unter die Beugungsgrenze bei der Wellenlänge der Anregung einzuengen. Hierzu kann der Lichtstrahl neben Anregungslicht Fluoreszenzverhinderungslicht umfassen, das am Ort des Intensitätsmaximums des Anregungslichts ein Intensitätsminimum aufweist, welches von Intensitätsmaxima umgeben ist und das außerhalb eines kleinen Bereichs um sein Intensitätsminimum die Emission von Fluoreszenzlicht verhindert. Beispielsweise kann das Fluoreszenzverhinderungslicht STED-Licht sein, das die Emission von Fluoreszenzlicht durch angeregte Fluorophore mittels stimulierter Emission verhindert. Das Fluoreszenzverhinderungslicht kann auch Umschaltlicht sein, das schaltbare Fluorophore in einen mit dem Anregungslicht nicht zur Emission von Fluoreszenz anregbaren Dunkelzustand schaltet.

### STAND DER TECHNIK

Ein Scannerkopf mit den Merkmalen des Oberbegriffs des unabhängigen Patentanspruchs 1, der jedoch nicht für hochauflösende Scanning-Fluoreszenzmikroskopie geeignet ist, ist aus der WO 90/00754 A bekannt. Der bekannte Scannerkopf umfasst eine Linse, die aus einer Lichtleiterfaser austretendes Anregungslicht zu einem parallelen Lichtstrahl formt. Der Lichtstrahl wird von zwei mit Schwenkantrieben verschwenkbaren Spiegeln umgelenkt und über den Okularanschluss eines Lichtmikroskops durch dessen Objektiv auf eine Probe gerichtet. Zum Abtasten der Probe mit dem durch das Objektiv fokussierten Lichtstrahl werden die Spiegel verschwenkt. Das in Gegenrichtung aus dem Okular austretende Fluoreszenzlicht wird von den Spiegeln zurück auf die Linse gerichtet, die es in die Lichtleiterfaser einkoppelt. Die Lichtleiterfaser verzweigt zu einer Lichtquelle zum Bereitstellen des Anregungslichts einerseits und zu einem Detektor zum Registrieren des Fluoreszenzlichts andererseits. Die Lichtquelle und der Detektor sind somit nicht Teil des Scannerkopfs, sondern stehen mit diesem über die Lichtleiterfaser in Verbindung. Eine Steuerung für die Schwenkantriebe der Spiegel ist ebenfalls außerhalb des Scannerkopfs vorgesehen.

Aus der DE 197 02 753 A1 ist ein Laser-Scanning-Mikroskop bekannt, das eine Anordnung zur Einkopplung von Laserstrahlung in einen Scannerkopf mit einem mindestens zweidimensional ablenkenden Scanner aufweist. Die Strahlung wird über ein Lichtmikroskop in eine Probe fokussiert. Die Einkopplung der Strahlung erfolgt über mindestens eine Lichtleiterfaser, wobei dem Faserende am Scannerkopf eine Kollimationsoptik zur Kollimierung der divergent austretenden Strahlung nachgeordnet ist. Von der Probe aus gesehen, ist dem Scanner in dem Scannerkopf ein Detektor zum Erfassen der vom gescannten Objekt stammenden Strahlung nachgeordnet.

Aus der DE 101 05 391 A1 sind ein hochauflösendes Scanning-Fluoreszenzmikroskop und ein Modul für ein hochauflösendes Scanning-Fluoreszenzmikroskop bekannt. Das hochauflösende Scanning-Fluoreszenzmikroskop weist eine Lichtquelle zum Aussenden eines zum Anregen eines Energiezustands einer Probe geeigneten Anregungslichtstrahls, einen Detektor zum Nachweis von Emissionslicht sowie einen von der Lichtquelle kommenden Stimulationslichtstrahl zum Erzeugen stimulierter Emissionen der von dem Anregungslichtstrahl angeregten Probe auf. Dabei sind der Anregungslichtstrahl und der Stimulationslichtstrahl derart angeordnet, dass sich ihre Intensitätsverteilungen in einem Fokalbereich teilweise überdecken. Den Stimulationslichtstrahl formende optische Elemente sind zu mindestens einem Modul zusammengefasst, das im Strahlengang des Scanning-Fluoreszenzmikroskops positionierbar ist. Konkret kann das Modul einen Bajonettanschluss aufweisen, mit dem es an einen entsprechenden Anschluss des Scanning-Fluoreszenzmikroskops anschließbar ist. Mit dem bekannten Modul für ein hochauflösendes Scanning-Fluoreszenzmikroskop sollen vorhandene Scanning-Fluoreszenzmikroskope zu STED-Mikroskopen aufgerüstet werden können. Die Justage der den Stimulationslichtstrahl formenden optischen Elemente gegenüber dem Scanning-Fluoreszenzmikroskop, um eine volle Funktion des Scanning-Fluoreszenzmikroskops als STED-Mikroskop zu erreichen, erweist sich jedoch als schwierig. Der Stimulationsstrahl weist nur dann seine gewünschte Intensitätsverteilung in dem Fokalbereich auf, wenn er exakt gegenüber einer Pupille des Objektivs des Scanning-Fluoreszenzmikroskops ausgerichtet wird und er diese Ausrichtung beim Abtasten der Probe mit dem Scanner des Scanning-Fluoreszenzmikroskops beibehält.

Unter dem Stichwort easySTED sind hochauflösende Scanning-Fluoreszenzmikroskope bekannt, bei denen das Anregungslicht und das Fluoreszenzverhinderungslicht gemeinsam durch eine Strahlformungsoptik hindurchtreten, die aber auf das Anregungslicht und das Fluoreszenzverhinderungslicht unterschiedlich wirkt. Insbesondere wird das Fluoreszenzverhinderungslicht so geformt, dass es ein von Intensitätsmaxima umgebenes Intensitätsminimum am Intensitätsmaximum des in einen beugungsbegrenzten Spot fokussierten Anregungslichts aufweist. Beispiele für Strahlformungsoptiken, die unter das Stichwort easySTED fallen, sind in der DE 10 2007 025 688 A1, der WO 2010/133678 A1 und der DE 102014 113 716 A1 beschrieben.

Aus der EP 2 359 178 A ist eine Vorrichtung zur dynamischen Verlagerung eines Lichtstrahls gegenüber einer den Lichtstrahl fokussierenden, eine Pupille aufweisenden Optik bekannt, um mit dem fokussierten Lichtstrahl ein Objekt in einem zweidimensionalen Abtastbereich abzutasten. Die Vorrichtung weist Strahlablenkungsmittel auf, die den Lichtstrahl gegenüber der optischen Achse der Optik in zwei verschiedenen Richtungen um dynamisch veränderbare Ablenkwinkel ablenken. Dabei sind je Richtung mindestens zwei Strahlablenkungsmittel hintereinander geschaltet, die unabhängig voneinander ansteuerbar sind, so dass sowohl die Strahllage des Lichtstrahls in der jeweiligen Richtung in der Pupille der fokussierenden Optik als auch der Winkel des Lichtstrahls zu der optischen Achse der fokussierenden Optik und damit die Lage des fokussierten Lichtstrahls in dem Abtastbereich einstellbar ist. Auf diese Weise wird es möglich, den zweidimensionalen Abtastbereich ohne Variation der optischen Verhältnisse über dem Abtastbereich abzutasten. Damit wird beispielsweise verhindert, dass sich die räumliche Phasenstruktur eines Stimulationsstrahls bei der STED-Mikroskopie in der Pupille verschiebt. Solche Verschiebungen führen dazu, dass die gewünschte Lichtintensitätsverteilung des fokussierten Stimulationsstrahls nicht mehr das von hohen Intensitätsmaxima umgebene niedrige Intensitätsminimum am Ort des Intensitätsmaximums des Anregungslichtstrahls aufweist. Darüber hinaus können mit der bekannten Vorrichtung Abstände der Ablenkungsmittel zu der Pupille oder einer Pupillenabbildung der fokussierenden Optik sowie Linsenfehler der fokussierenden Optik und Fehler der Strahlablenkungsmittel kompensiert werden. Darüber hinaus kann der Drehpunkt des abgelenkten Lichtstrahls in axialer Richtung vorgegeben werden, um z. B. unterschiedliche axiale Lagen verschiedener Objektive zu berücksichtigen.

Die wissenschaftliche Veröffentlichung "A STED Microscope Designed for Routine Biomedical Applications" (F. Görlitz et al., Progress in Electromagnetics Research, Vol. 147, 57-68, 2014) offenbart ein STED-Mikroskop. Das STED-Mikroskop weist zwei Laser-Lichtquellen auf, deren Lichtstrahlen gemeinsam mit einer der EP 2 359 178 A entsprechenden Vorrichtung durch eine easySTED-Strahlformungsoptik auf eine zu scannende Probe gelenkt werden, sodass der eine Lichtstrahl als Anregungslichtstrahl, der andere Lichtstrahl als Fluoreszenzverhinderungslichtstrahl wirkt. Die Lichtstrahlen von den beiden Laser-Lichtquellen werden kombiniert und in eine Lichtleiterfaser eingekoppelt. Das aus der Lichtleiterfaser austretende Licht gelangt über einen richtungsabhängigen Strahlteiler und einen "Quadscanner" mit vier beweglichen Spiegeln in ein Lichtmikroskop. In dem Lichtmikroskop ist die easySTED-Strahlformungsoptik angeordnet, die den Fluoreszenzverhinderungslichtstrahl so formt, dass er im Fokus des Lichtmikroskops ein von Intensitätsmaxima umgebenes Intensitätsminimum aufweist, während sie den Anregungslichtstrahl so formt, dass er im Fokus des Lichtmikroskops am Ort des Intensitätsminimums des Fluoreszenzverhinderungslichts ein Intensitätsmaximum aufweist. Fluoreszenzlicht, das in Gegenrichtung aus dem Lichtmikroskop austritt, wird nach dem Quadscanner von dem richtungsabhängigen Strahlteiler zu zwei Detektoren hin umgelenkt, die hinter den beiden Ausgängen eines dichroitischen Strahlteilers angeordnet sind.

Die wissenschaftliche Veröffentlichung "Stimulated Emission Depletion microscopy to study amyloid fibril formation" (P. Mahou et al., Single Molecule Spectroscopy and Superresolution Imaging VIII, J. Enderlein et al. (Hg.), Proc. of SPIE Vol. 9331, 2015) offenbart ein STED-Mikroskop, das die Autoren durch einen optischen Aufbau realisiert haben, der ein Lichtmikroskop umfasst. Es ist nicht offenbart, in welcher konkreten Form der optische Aufbau realisiert wurde. Der optische Aufbau weist Lichtleiterfasern von 30 m und 100 m auf, so dass darauf zu schließen ist, dass es sich um einen optischen Tischaufbau handelt. In den Aufbau wird ein Lichtstrahl einer Laserlichtquelle eingekoppelt, der unmittelbar in einen Anregungslichtstrahl und einen Fluoreszenzverhinderungslichtstrahl geteilt wird. Beide Lichtstrahlen durchlaufen getrennt Strahlformungseinrichtungen, wobei der Fluoreszenzverhinderungslichtstrahl so geformt wird, dass er am Ort des Intensitätsmaximums des Anregungslichts eine Nullstelle aufweist, die von einem ringförmigen Intensitätsmaximum ("Doughnut") umgeben ist. Mittels eines "Quadscanners" mit vier beweglichen Spiegeln und dem Objektiv des Lichtmikroskops wird eine Probe mit den überlagerten Lichtstrahlen gescannt. Das aus der Probe emittierte Fluoreszenzlicht wird mittels eines halbdurchlässigen Spiegels, der von der Probe aus gesehen hinter einem Strahlteiler liegt, mit dem die beiden Lichtstrahlen wieder vereinigt werden, zu einem Detektor gelenkt.

Aus MicroTime 200 STED, Super-resolution add-on for the confocal time-resolved microscopy platform, PicoQuant GmbH, Berlin, Deutschland, August 2014 ist eine Vorrichtung zum Aufrüsten eines Lichtmikroskops zu einem STED-Mikroskop bekannt. Hierbei wird Anregungslicht von einem Anregungslichtlaser und Fluoreszenzverhinderungslicht von einem STED-Laser kombiniert und über eine Lichtleiterfaser zugeführt. Über einen dichroitischen Spiegel gelangt das kombinierte Licht in das Lichtmikroskop. In diesem ist eine easySTED-Strahlformungsoptik angeordnet. Das aus dem Lichtmikroskop austretende Fluoreszenzlicht wird über den dichroitischen Spiegel zu einem Detektor ausgekoppelt. Das Scannen der Probe erfolgt durch Objektivverschiebung mittels Piezo-Aktuatoren. Dabei sind der dichroitische Spiegel und der Detektor in einer optischen Haupteinheit angeordnet, an die die Lichtleiterfaser angeschlossen ist, die über einen Tubus mit dem Lichtmikroskop in Verbindung steht und die durch ein Gehäuse abgedeckt ist.

Aus der US 2010/0014156 A1 ist ein STED-Mikroskop bekannt, das eine Mikroskopeinheit, eine Scaneinheit und eine Lichtquelleneinheit umfasst. Die Scaneinheit ist über ein Pupillenprojektionslinsensystem an die Mikroskopeinheit angeschlossen und dazu vorgesehen, einen kombinierten Lichtstrahl aus Anregungslicht und STED-Licht in ein Objektiv der Mikroskopeinheit einzukoppeln. Die Scaneinheit umfasst eine EasySTED-Anordnung, zwei Drehspiegel auf der Mikroskop-Seite der EasySTED-Anordnung und einen Strahlteiler auf der Lichtquellenseite der EasySTED-Anordnung. Der Strahlteiler führt zu einem Detektor in der Scaneinheit einerseits und zu einem Anschluss an die Lichtquelleneinheit andererseits. Die Lichtquelleneinheit umfasst zwei Laser für das Anregungslicht und das STED-Licht, die in der Lichtquelleneinheit in eine Single Mode-Faser zusammengeführt werden.

### AUFGABE DER ERFINDUNG

Der Erfindung liegt die Aufgabe zugrunde, einen Scannerkopf aufzuzeigen, mit dem vorhandene Lichtmikroskope verschiedenen Typs und verschiedener Hersteller problemlos zu hochauflösenden Scanning-Fluoreszenzmikroskopen aufgerüstet werden können.

### LÖSUNG

Die Aufgabe der Erfindung wird durch einen Scannerkopf mit den Merkmalen des unabhängigen Patentanspruchs 1 gelöst. Die abhängigen Patentansprüche 2 bis 7 betreffen bevorzugte Ausführungsformen des erfindungsgemäßen Scannerkopfs. Die Patentansprüche 8 bis 15 sind auf Vorrichtungen zum Aufrüsten eines Lichtmikroskops zu einem hochauflösenden Scanning-Fluoreszenzmikroskop mit dem erfindungsgemäßen Scannerkopf bzw. ein solches hochauflösendes Scanning-Fluoreszenzmikroskop gerichtet.

### BESCHREIBUNG DER ERFINDUNG

Ein erfindungsgemäßer Scannerkopf für hochauflösende Scanning-Fluoreszenzmikroskopie umfasst erste Anschlusseinrichtungen, die zum Anschließen des Scannerkopfs an einen Anschluss eines Lichtmikroskops ausgebildet sind, gegenüber dem ein Zwischenbild des Lichtmikroskops eine definierte Lage aufweist. Damit ist insbesondere gemeint, dass die ersten Anschlusseinrichtungen zum Anschließen des Scannerkopfs an einen Kameraanschluss oder an einen anderen vollkorrigierten und/oder standardisierten oder normierten Anschluss mit definierter Lage eines Zwischenbilds des Lichtmikroskops ausgebildet sind, wie er bei vielen Lichtmikroskopen unterschiedlichen Typs und unterschiedlicher Hersteller vorhanden ist, um zum Beispiel ein Bild der jeweils mit dem Lichtmikroskop betrachteten Probe mit einer Kamera aufnehmen zu können. Ein solcher Kameraanschluss richtet eine angeschlossene Kamera definiert gegenüber einer Bildebene des Lichtmikroskops aus. Konkret kann es sich bei dem Anschluss mit definierter Lage eines Zwischenbilds des Lichtmikroskops um einen sogenannten C-Mount handeln, der ein Anschlussgewinde mit einem Anschlag in definiertem Abstand zu einer Bildebene des Lichtmikroskops aufweist. Viele vorhandene Lichtmikroskope verfügen über einen C-Mount.

Neben den ersten Anschlusseinrichtungen zum Anschließen an den Anschluss mit definierter Lage eines Zwischenbilds des Lichtmikroskops weist der erfindungsgemäße Scannerkopf zweite Anschlusseinrichtungen auf, die zum Anschließen des Scannerkopfs über Lichtleiterfasern an eine externe Lichtquelle und an einen externen Detektor für Fluoreszenzlicht ausgebildet sind und die getrennte Leichtleiteranschlüsse für das Licht von der Lichtquelle und das Fluoreszenzlicht zu dem Detektor umfassen. Diese getrennten Lichtleiteranschlüsse sind Voraussetzung dafür, dass das Licht von der externen Lichtquelle und das Fluoreszenzlicht zu dem externen Detektor über hierfür jeweils optimal angepasste Lichtleiterfasern geführt werden kann. So wird für das Licht von der Lichtquelle in der hochauflösenden Scanning-Fluoreszenzmikroskopie regelmäßig eine polarisationserhaltende Singlemode-Lichtleiterfaser benötigt, während für das Fluoreszenzlicht, um Intensitätsverluste zu vermeiden, eine Multimode-Lichtleiterfaser zu verwenden ist.

Strahlformungseinrichtungen des erfindungsgemäßen Scannerkopfs sind zwischen den zweiten Anschlusseinrichtungen und den ersten Anschlusseinrichtungen angeordnet und derart zum Formen eines Lichtstrahls aus Licht von der externen Lichtquelle ausgebildet, dass sie einen Teil des Lichts von der Lichtquelle so formen, dass er im Fokus des Lichtmikroskops ein von Intensitätsmaxima umgebenes Intensitätsminimum aufweist, während sie einen anderen Teil des Lichts von der Lichtquelle so formen, dass er im Fokus des Lichtmikroskops am Ort des Intensitätsminimums des einen Teils des Lichts von der Lichtquelle ein Intensitätsmaximum aufweist. Der eine Teil des Lichts von der Lichtquelle ist dabei insbesondere als Fluoreszenzverhinderungslicht vorgesehen, während der andere Teil des Lichts von der Lichtquelle als Anregungslicht vorgesehen ist.

Weiterhin umfasst der erfindungsgemäße Scannerkopf Drehspiegel, die zwischen den Strahlformungseinrichtungen und den ersten Anschlusseinrichtungen angeordnet und zum derartigen Ablenken des Lichtstrahls um unterschiedliche Ablenkwinkel ausgebildet sind, dass eine Probe mit dem von dem Lichtmikroskop fokussierten Lichtstrahl in zwei verschiedenen Richtungen abgetastet wird, wobei Fluoreszenzlicht von der Probe zurück zu den zweiten Anschlusseinrichtungen geführt wird. Dabei sind je Richtung, in der die Probe abgetastet wird, zwei Drehspiegel mit jeweils einem Drehantrieb vorhanden, wobei die Drehantriebe unabhängig voneinander ansteuerbar sind, um die beiden Drehspiegel um zueinander parallele Schwenkachsen zu verschwenken. Die Drehspiegel bilden den Scanner des erfindungsgemäßen Scannerkopfs aus. Ihre Funktion ist aber nicht auf diejenige eines Scanners beschränkt. Durch die beiden Drehspiegel mit voneinander unabhängigen Drehantrieben je Richtung, in der die Probe abgetastet wird, ist der Lichtstrahl mit den Drehspiegeln derart ablenkbar, dass er nicht nur unter dem gewünschten Winkel, sondern auch an der gewünschten Stelle durch die Pupille des Objektivs des jeweiligen Lichtmikroskops hindurchtritt. Dies ist insbesondere Voraussetzung dafür, dass der von dem Lichtmikroskop fokussierte eine Teil des Lichts tatsächlich das gewünschte, von den Intensitätsmaxima umgebene Intensitätsminimum ausbildet. Mit Hilfe der Drehspiegel können axiale Versätze zwischen der Achse des Anschlusses mit definierter Lage eines Zwischenbilds des Lichtmikroskops und dem Zentrum der Pupille des Objektivs des Lichtmikroskops ebenso kompensiert werden wie alle anderen optischen und Ausrichtungsfehler, die bereits in der EP 2 359 178 A, siehe oben, als mit einer solchen Anordnung von Drehspiegeln kompensierbar angesprochen sind.

Zudem weist der erfindungsgemäße Scannerkopf Ablenkmittel auf, die zwischen den Drehspiegeln und dem Lichtleiteranschluss für das Licht von der Lichtquelle angeordnet und ausgebildet sind, um das Fluoreszenzlicht zu dem Lichtleiteranschluss für das Fluoreszenzlicht abzulenken. Das von den Drehspiegeln entscannte Fluoreszenzlicht wird so von dem Strahlengang des Lichts von der Lichtquelle abgetrennt und dem für das Fluoreszenzlicht vorgesehenen separaten Lichtleiteranschluss zugeführt. Die Abtrennung kann dabei von den Drehspiegeln aus gesehen vor oder nach den Strahlformungseinrichtungen erfolgen, wobei ein Abtrennen nach den Strahlformungseinrichtungen nur dann sinnvoll ist, wenn die Strahlformungseinrichtungen das Fluoreszenzlicht vollständig weiterleiten, d. h. keine wesentlichen Intensitätsverluste beim Hindurchtreten des Fluoreszenzlichts durch die Strahlformungseinrichtungen auftreten.

Alle bis hierher beschriebenen Merkmale des erfindungsgemäßen Scannerkopfs sind wesentlich dafür, dass der Scannerkopf mit verschiedenen Lichtmikroskopen, d. h. Lichtmikroskopen unterschiedlichen Typs und/oder unterschiedlicher Hersteller, kompatibel ist, d. h. zur Ausbildung eines hochauflösenden Scanning-Fluoreszenzmikroskops kombiniert werden kann. Dass auf diese Weise ein Scannerkopf bereitgestellt werden kann, der die Aufgabe der Erfindung tatsächlich löst, ist insoweit überraschend, als dass Scannerköpfe, um verschiedene Lichtmikroskope zu Scanning-Fluoreszenzmikroskopen aufzurüsten, wegen des auftretenden Justageaufwands keine Verbreitung gefunden haben. Grundsätzlich ist der Justageaufwand bei einem hochauflösenden Scanning-Fluoreszenzmikroskop noch höher. Bei dem erfindungsgemäßen Scannerkopf wird dieses Problem durch die vier Drehspiegel beherrscht.

Die vorliegende Erfindung schlägt einen grundsätzlich anderen Weg als die DE 101 05 391 A1 ein, die ein Modul für die Formung eines Stimulationslichtstrahls lehrt, um ein vorhandenes Scanning-Fluoreszenzlichtmikroskop zu einem STED-Mikroskop aufzurüsten, wobei der Scanner des vorhandenen Scanning-Fluoreszenzmikroskops genutzt wird. Der erfindungsgemäße Scannerkopf weist hingegen einen eigenen und ganz speziellen Scanner auf. Damit wird es nicht nur möglich, herkömmliche Lichtmikroskope zu hochauflösenden Scanning-Fluoreszenzmikroskopen aufzurüsten, sondern durch die spezielle Ausbildung des Scanners kann die Anpassung an das jeweilige Lichtmikroskop von dem Scanner, d. h. mit Hilfe der Ansteuerung seiner Drehspiegel, bewältigt werden.

Wenn ein erfindungsgemäßer Scannerkopf mit einem vorhandenen Scanning-Fluoreszenzmikroskop kombiniert wird, hat dies außerhalb des eigentlichen Scanning-Fluoreszenzmikroskops, d. h. so zu erfolgen, dass der Scannerkopf nicht im Strahlengang des Scanning-Mikroskops, sondern in dem Strahlengang des davon umfassten Lichtmikroskops angeordnet wird. Dies bedeutet insbesondere, dass zwischen dem Objektiv des genutzten Lichtmikroskops und dem erfindungsgemäßen Scannerkopf kein das Scanning-Fluoreszenzmikroskop ausmachender Scanner angeordnet sein darf und nur der Scanner des Scannerkopfs im Strahlengang zu der und von der Probe liegt.

Mit dem Verzicht auf die Nutzung eines möglicherweise bereits vorhandenen Scanners und das Bereitstellen eines eigenen, vergleichsweise komplexen Scanners bei dem erfindungsgemäßen Scannerkopf wird die gewünschte Adaption des erfindungsgemäßen Scannerkopfs an unterschiedliche vorhandene Lichtmikroskope ermöglicht. Die weiteren Merkmale des erfindungsgemäßen Scannerkopfs sorgen dafür, dass mit seiner Hilfe hochauflösende Scanning-Fluoreszenzmikroskopie durchgeführt werden kann und dass dabei alle für die Justage des optischen Aufbaus unmittelbar relevanten Teile mechanisch zusammenhängend Teil des Scannerkopfs sind, während alle anderen Teile extern des Scannerkopfs angeordnet werden. So ist nicht nur die Lichtquelle, sondern auch der Detektor ausgelagert und über eine Lichtleiterfaser angeschlossen.

Der Scannerkopf weist ein einziges Gehäuse auf, an oder in dem die ersten Anschlusseinrichtungen und die zweiten Anschlusseinrichtungen vorgesehen sind und das alle weiteren Bestandteile des Scannerkopfs umschließt. Das Gehäuse kann im Wesentlichen als Ummantelung des optischen Aufbaus des Scannerkopfs vorgesehen sein, der eine eigene tragende Struktur aufweisen kann. Alternativ kann das Gehäuse oder können Teile des Gehäuses auch eine den optischen Aufbau des Scannerkopfs tragende Struktur ausbilden.

Auf diese Weise wird es ermöglicht, dass die ersten Anschlusseinrichtungen zur ortsfesten Lagerung des Scannerkopfs an dem Anschluss mit definierter Lage eines Zwischenbilds des Lichtmikroskops ausgebildet sind. Das heißt, der erfindungsgemäße Scannerkopf kommt insbesondere bei einem vertikal ausgerichteten Anschluss ohne zusätzliche Abstützungen außer derjenigen an dem Anschluss aus. Dazu können die ersten Anschlusseinrichtungen starr mit dem Gehäuse des Scannerkopfes verbunden sein. Der erfindungsgemäße Scannerkopf belastet den Anschluss mechanisch nicht stärker als eine dort angeschlossene größere Kamera, für die der Anschluss im Normalfall vorgesehen ist.

Die Drehspiegel des Scanners des erfindungsgemäßen Scannerkopfs sind vorzugsweise um eine Ebene herum angeordnet, auf die gemäß der Normierung des Anschlusses ein Zwischenbild des Lichtmikroskops fällt. Die definierte Lage des Zwischenbilds gegenüber dem Anschluss des Lichtmikroskops wird bei dem erfindungsgemäßen Scannerkopf ausgenutzt, um die Drehspiegel des Scanners um dessen Bildebene herum anzuordnen. Dabei ist keine ganz spezielle Anordnung der Drehspiegel gegenüber dieser Bildebene erforderlich, da mit den zwei unabhängigen Drehspiegeln je gewünschter Abtastrichtung jegliche Abweichungen der Lagen der einzelnen Drehspiegel von dieser Bildebene kompensierbar sind.

Die Drehspiegel des Scanners des erfindungsgemäßen Scannerkopfs sind in aller Regel die einzigen beweglichen Teile des Scannerkopfs. Die bei ihrer gesteuerten Bewegung anfallende Abwärme kann ebenso wie in dem Scannerkopf durch ungewollt in Wärme umgewandeltes Licht anfallende Wärme in aller Regel ohne spezielle Kühleinrichtungen allein durch Konvektion (bei Bedarf erhöht durch Kühlkörper) in die Umgebung des Scannerkopfs abgeführt werden. Insbesondere sind keine beweglichen Kühleinrichtungen erforderlich, die irgendwelche Schwingungen des Scannerkopfs induzierten könnten. Die Drehantriebe der Drehspiegel können problemlos so ausgeführt werden, dass auch ihr Betrieb keine unerwünschten Schwingungen des Scannerkopfs anregt.

Vorzugsweise sind bei dem erfindungsgemäßen Scannerkopf der Lichtleiteranschluss für das Licht von der Lichtquelle und der Lichtleiteranschluss für das Fluoreszenzlicht zu dem Detektor parallel zueinander ausgerichtet und an einer den ersten Anschlusseinrichtungen gegenüberliegenden Seite des Scannerkopfs angeordnet. Der Scannerkopf weist damit einen im Wesentlichen axialen Aufbau längs der durch den Anschluss mit definierter Lage eines Zwischenbilds des Lichtmikroskops vorgegebenen optischen Achse auf und ist dadurch bei vertikal ausgerichtetem Anschluss durch seine kompakten Abmessungen orthogonal zu der optischen Achse gegenüber dem Anschluss gut ausbalanciert.

Die Strahlformungseinrichtungen des erfindungsgemäßen Scannerkopfs umfassen eine Strahlformungsoptik, durch die beide Teile des Lichts von der Lichtquelle auf einem Lichtpfad hindurchtreten und die den einen Teil des Lichts von der Lichtquelle so formt, dass er im Fokus des Lichtmikroskops das von den Intensitätsmaxima umgebene Intensitätsminimum aufweist, während sie den anderen Teil des Lichts von der Lichtquelle so formt, dass er im Fokus des Lichtmikroskops am Ort des Intensitätsminimum des einen Teils des Lichts von der Lichtquelle das Intensitätsmaximum aufweist. Das heißt, die Strahlformungseinrichtungen setzen das sogenannte easySTED-Konzept um, wie es als solches in der DE 10 2007 025 688 A1, der WO 2010/133678 A1 und der DE 10 2014 113 716 A1 beschrieben ist, und die dort beschriebenen konkreten easySTED-Ausführungsformen können auch in dem erfindungsgemäßen Scannerkopf verwirklicht werden. Durch eine easySTED-Strahlformungsoptik fällt der erfindungsgemäße Scannerkopf besonders kompakt aus, da keine getrennten Lichtpfade für den einen und den anderen Teil des Lichts von der Lichtquelle vorhanden sind und entsprechend auch nicht getrennt und wieder zusammengeführt werden müssen.

Insbesondere können die Strahlformungseinrichtungen einer der in der DE 10 2014 113 716 A1 beschriebenen Ausführungsformen der Vorrichtung zum getrennten Modulieren von Wellenfronten von zwei Komponenten eines Lichtstrahls entsprechen, die einen Spatial Light Modulator umfassen und bei denen die beiden Komponenten dem einen Teil des Lichts von der Lichtquelle bei der vorliegenden Erfindung entsprechen, während eine weitere ebenfalls durch die vorbeschriebene Vorrichtung hindurchtretende, aber nicht modulierte Komponente anderer Wellenlänge dem anderen Teil des Lichts von der Lichtquelle bei der vorliegenden Erfindung entspricht. Ganz insbesondere weisen die Strahlformungseinrichtungen den in Fig. 1 der DE 10 2014 113 716 A1 gezeigten optischen Aufbau auf. Bei allen Ausführungsformen der Vorrichtung gemäß der DE 10 2014 113 716 A1 kann die Intensitätsverteilung des als Fluoreszenzverhinderungslicht dienenden ersten Teil des Lichts von der Lichtquelle, insbesondere durch Ansteuern des Spatial Light Modulators, so eingestellt werden, dass sein Intensitätsminimum im Fokus des Lichtmikroskops in allen drei Raumrichtungen, d. h. auch in der z-Richtung einer optischen Achse des Objektivs des Lichtmikroskops, von seinen Intensitätsmaxima begrenzt wird.

In dem Scannerkopf kann eine doppelbrechende Platte angeordnet sein. Die doppelbrechende Platte kann zwischen den Strahlformungseinrichtungen und dem Ablenkmittel angeordnet sein. Sie kann aber auch innerhalb der Strahlformungseinrichtungen angeordnet sein, sodass sie einem Teil der Strahlformungseinrichtungen nachgeordnet, aber einem weiteren Teil der Strahlformungseinrichtungen und dem Ablenkmittel vorgeordnet ist. Die doppelbrechende Platte ist in einer Standardausrichtung so ausgerichtet, dass ihre schnelle Achse parallel zu dem Lichtstrahl ist. Das heißt, der (zirkular polarisierte) Lichtstrahl passiert die doppelbrechende Platte mit unbeeinflusster Polarisation. Die doppelbrechende Platte ist aber kippbar. Wenn die doppelbrechende Platte verkippt wird, wird auch ihre schnelle Achse gegenüber dem Lichtstrahl verkippt. Dies bedeutet, dass die Polarisation des Lichtstrahls bei seinem Passieren der doppelbrechenden Platte beeinflusst wird. Durch das Verkippen der doppelbrechenden Platte kann somit die Polarisation des Lichtstrahls gezielt beeinflusst werden. Dies bedeutet insbesondere, dass die Polarisation des Lichtstrahls nach dem Passieren der doppelbrechenden Platte in einem vorherbestimmten Maße von der zirkularen Polarisation abweichen kann. Wenn die der doppelbrechenden Platte nachfolgenden optischen Elemente, insbesondere optische Elemente des Lichtmikroskops, optische Fehler, Unvollkommenheiten oder allgemein polarisationsändernde Eigenschaften aufweisen, können sie die Polarisation des Lichtstrahls in unerwünschter Weise beeinflussen. Mit der doppelbrechenden Platte kann die Polarisationsänderung vorweggenommen, d. h. eine entgegengesetzte Beeinflussung der Polarisation des Lichtstrahls vorgenommen werden, sodass die Beeinflussung durch die nachfolgenden optischen Elemente genau ausgeglichen wird. In dieser Weise kann dafür gesorgt werden, dass der Lichtstrahl trotz der bei optischen Elementen häufig unvermeidbaren polarisationsändernden Eigenschaften nach dem Passieren der optischen Elemente die erwünschte zirkulare Polarisation aufweist, die für die Ausbildung einer idealen Nullstelle im Fokus des Fluoreszenzverhinderungslichtstrahls erforderlich ist.

Konkret können maximale Abmessungen des erfindungsgemäßen Scannerkopfs in Richtung der optischen Achse und senkrecht dazu 25 cm oder weniger betragen. Konkret kann der Scannerkopf einschließlich eines quaderförmigen Gehäuses in Richtung der optischen Achse 2 dm hoch und quer dazu 1 bis 1 ½ dm breit bzw. tief sein. Die Masse des Scannerkopfs kann maximal 2 kg, vorzugsweise maximal 1,5 kg oder noch mehr bevorzugt maximal 1,2 kg betragen. Oft beträgt sie etwa 1 kg.

Da für das Licht von der Lichtquelle vorzugsweise eine polarisationserhaltende Singlemode-Lichtleiterfaser verwendet wird, während für das Fluoreszenzlicht zu dem Detektor vorzugsweise eine Multimode-Lichtleiterfaser verwendet wird, kann der Lichtleiteranschluss für das Licht von der Lichtquelle speziell für das Anschließen einer Singlemode-Lichtleiterfaser und der Lichtleiteranschluss für das Fluoreszenzlicht speziell für das Anschließen mindestens einer Multimode-Lichtleiterfaser ausgebildet sein. Die Lichtleiterfasern können unabhängig voneinander lösbar oder fest mit den Lichtleiteranschlüssen verbunden sein bzw. werden. Fest verbundene Lichtleiterfasern können dabei als Teil des Scannerkopfs angesehen werden.

Der erfindungsgemäße Scannerkopf kann weiterhin einen Steuerkabelanschluss für ein Steuerkabel zum Anschließen der Drehantriebe der Drehspiegel an eine externe Steuerung aufweisen. Der Steuerkabelanschluss kann direkt an den Drehantrieben oder an dem Gehäuse des Scannerkopfs ausgebildet sein. Das Steuerkabel kann lösbar oder fest mit dem Steuerkabelanschluss verbunden sein bzw. werden. Ein fest verbundenes Steuerkabel kann dabei als Teil des Scannerkopfs angesehen werden. In dem Scannerkopf selbst sind vorzugsweise ausschließlich die Drehantriebe selbst angeordnet. Grundsätzlich können Treiber der Drehantriebe, die möglichst nah an den Drehantrieben selbst angeordnet werden, auch Teil des Scannerkopfs sein. Vorzugsweise sind aber auch solche Treiber extern vorgesehen und über das Steuerkabel an den Scannerkopf angeschlossen.

Eine erfindungsgemäße Vorrichtung zum Aufrüsten eines Lichtmikroskops zu einem hochauflösenden Scanning-Fluoreszenzmikroskop umfasst neben einem erfindungsgemäßen Scannerkopf eine Basiseinheit, die eine das Licht bereitstellende Lichtquelle, einen Detektor für das Fluoreszenzlicht und eine Steuerung zur Ansteuerung der Drehantriebe der Drehspiegel umfasst. Von der Lichtquelle führt ein Lichtleiter zu dem Lichtleiteranschluss des Scannerkopfs für das Licht von der Lichtquelle. Ein weiterer Lichtleiter führt von dem Lichtleiteranschluss für das Fluoreszenzlicht zu dem Detektor. Zudem führt ein Steuerkabel von der Steuerung den Drehantrieben der Drehspiegel des Scannerkopfs.

Wie bereits mehrfach angesprochen wurde, umfasst der Lichtleiter für das Licht von der Lichtquelle vorzugsweise eine polarisationserhaltende Singlemode-Lichtleiterfaser, während der Lichtleiter für das Fluoreszenzlicht eine Multimode-Lichtleiterfaser umfasst.

Die Basiseinheit kann einen Versorgungsanschluss zum Zuführen einer Versorgungsniederspannung aufweisen. Die Versorgungsniederspannung kann mit einem handelsüblichen Netzteil bereitgestellt werden. Damit kann insbesondere eine Anpassung der Basiseinheit an unterschiedliche öffentliche Stromnetze erfolgen, indem ein jeweils passendes Netzteil ausgewählt wird.

Weiterhin kann die Basiseinheit einen Kommunikationsanschluss zum Anschließen an einen Steuerrechner aufweisen. Über diesen Kommunikationsanschluss, der einem üblichen Standard, wie beispielsweise USB, entsprechen kann, kann mit dem Steuerrechner die Basiseinheit und darüber der Scannerkopf angesteuert werden. Hierfür kann eine spezielle Software zur Installation auf dem Steuerrechner vorgesehen sein.

Die in der Basiseinheit angeordnete Lichtquelle kann im Wesentlichen aus mindestens zwei Lasern bestehen, die bei unterschiedlichen Wellenlängen emittieren. Dabei handelt es sich sinnvollerweise um Wellenlängen, die für Anregungslicht einerseits und Stimulationslicht andererseits bei der STED-Mikroskopie besonders gut geeignet sind. Als Laser können insbesondere gepulste Laser, aber auch CW-Laser Verwendung finden. Insbesondere können kostengünstige Laserdioden zum Einsatz kommen.

Um mit der erfindungsgemäßen Vorrichtung auch ein dreidimensionales Abtasten einer Probe mit dem von dem Lichtmikroskop fokussierten Licht von der Lichtquelle zu ermöglichen, kann ein durch Ansteuern eines Aktuator höhenveränderbarer Probenhalter vorgesehen sein, wobei der Aktuator über ein weiteres Steuerkabel an eine weitere Steuerung in der Basiseinheit angeschlossen ist. Dieser Probenhalter ersetzt oder ergänzt den Probenhalter des Lichtmikroskops und dient dazu, die Probe in z-Richtung, d. h. in Richtung einer optischen Achse des Objektivs des Lichtmikroskops gegenüber dem von Intensitätsmaxima umgebenen Intensitätsminimum des als Fluoreszenzverhinderungslicht dienenden einen Teils des Lichts zu verlagern. Ein solcher höhenveränderbarer Probenhalter ist nur sinnvoll in Verbindung mit Strahlformungseinrichtungen des Scannerkopfs einsetzbar, die den als Fluoreszenzverhinderungslicht dienenden einen Teils des Lichts so formen, das sein Intensitätsminimum im Fokus des Lichtmikroskops auch in z-Richtung von seinen Intensitätsmaxima umgeben ist. Solche Strahlformungseinrichtungen sind z. B. in der DE 10 2014 113 716 A1 beschrieben.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen abgeführten Merkmale können durch andere Merkmale ergänzt werden oder die einzigen Merkmale sein, die das jeweilige Verfahren oder Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in schematischer Darstellung einen erfindungsgemäßen Scannerkopf angeschlossen an ein Lichtmikroskop.
- **Fig. 2**: zeigt in schematischer Darstellung eine erfindungsgemäße Vorrichtung mit einem an ein Lichtmikroskop angeschlossenen erfindungsgemäßen Scannerkopf.
- **Fig. 3**: zeigt die Ausführungsform eines Scanners des erfindungsgemäßen Scannerkopfs gemäß Fig. 1 oder Fig. 2.
- **Fig. 4**: zeigt Intensitätsverteilungen von Teilen des Lichts im Fokuspunkt des Lichtmikroskops, das mit dem erfindungsgemäßen Laserscanner zu einem ScanningFluoreszenzmikroskop aufgerüstet wird.
- **Fig. 5**: zeigt in schematischer Darstellung eine weitere Ausführungsform des erfindungsgemäßen Scannerkopfs angeschlossen an ein Lichtmikroskop; und
- **Fig. 6**: zeigt in schematischer Darstellung noch eine weitere Ausführungsform des erfindungsgemäßen Scannerkopfs angeschlossen an ein Lichtmikroskop.

### FIGURENBESCHREIBUNG

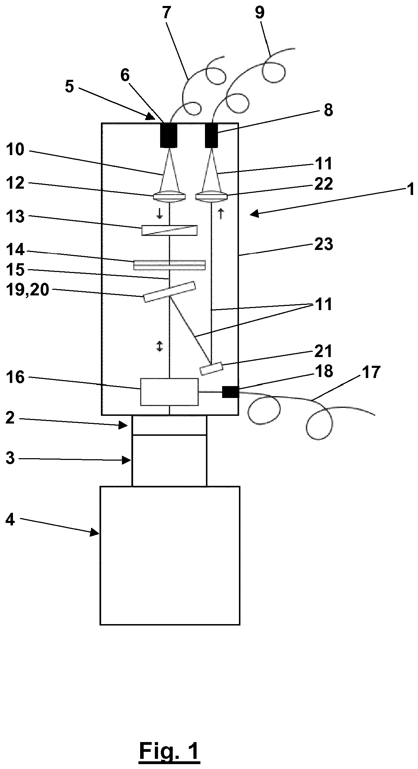

Der in **Fig. 1** schematisch dargestellte Scannerkopf 1 ist über erste Anschlusseinrichtungen 2 an einen vollkorrigierten Anschluss 3 eines Lichtmikroskops 4 angeschlossen, gegenüber dem eine Lage eines Zwischenbilds des Lichtmikroskops 4 definiert ist. Der Anschluss 3 kann beispielsweise ein Kameraanschluss und insbesondere ein sogenannter C-Mount sein. Zweite Anschlusseinrichtungen 5 des Scannerkopfs 1 umfassen einen Lichtleiteranschluss 6 zum Anschließen einer polarisationserhaltenden Singlemode-Lichtleiterfaser 7 und einen weiteren Lichtleiteranschluss 8 zum Anschließen einer Multimode-Lichtleiterfaser 9. Über die Multimode-Lichtleiterfaser 7 wird dem Scannerkopf 1 Licht 10 von einer hier nicht dargestellten externen Lichtquelle zugeführt. Über die Multimode-Lichtleiterfaser 9 wird Fluoreszenzlicht 11 aus dem Scannerkopf 1 einem hier nicht dargestellten externen Detektor zum Registrieren des Fluoreszenzlichts 11 zugeführt. Das aus der Singlemode-Lichtleiterfaser 7 austretende Licht 10 wird mit Strahlformungseinrichtungen 12 bis 14, die zwischen den zweiten Anschlusseinrichtungen 5 und den ersten Anschlusseinrichtungen 2 angeordnet sind, so geformt, dass ein Teil des Lichts 10, der als Fluoreszenzverhinderungslicht dient und bei dem es sich um Licht handeln kann, das angeregte Fluorophore zu einer stimulierten Emission veranlasst, im Fokus des Lichtmikroskops 4 ein von Intensitätsmaxima umgebenes Intensitätsminimum aufweist. Ein anderer Teil des Lichts 10, der als Anregungslicht zum Anregen der Fluorophore zur Emission von Fluoreszenzlicht dient, weist hingegen im Fokus des Lichtmikroskops 4 am Ort des Intensitätsminimums des Fluoreszenzverhinderungslichts ein Intensitätsmaximum auf. Dabei treten beide Teile des Lichts 10 gemeinsam durch die Strahlformungseinrichtungen 12 bis 14 hindurch, die aber zumindest teilweise wellenlängenabhängig auf die beiden Teile des Lichts einwirken, welche unterschiedliche Wellenlängen aufweisen. Zunächst wird das Licht 10 mit einer Kopplungslinse 12 kollimiert. Dann wird das linear polarisierte Licht 10 mit einer λ/4-Platte 13 zirkular polarisiert. Anschließend tritt das zirkular polarisierte Licht 10 durch eine Phasenplatte 14 hindurch. Die Phasenplatte 14 ist das eigentliche achromatische Element der Strahlformungseinrichtungen 12 bis 14 und sorgt für die unterschiedliche Formung der beiden Teile des Lichts 10 in Bezug auf ihre Lichtintensitätsverteilungen im Fokus des Lichtmikroskops 4. Der derart aus dem Licht 10 geformte Lichtstrahl 15 wird mit einem Scanner 16 dynamisch abgelenkt, um eine Probe mit den überlagerten Lichtintensitätsverteilungen der beiden Teile des Lichts 10 abzutasten. Dabei ist der Scanner 16 insbesondere gemäß der WO 2010/069987 A ausgebildet und umfasst je Richtung, in der die Probe abgetastet wird, mindestens zwei Drehspiegel mit voneinander unabhängig ansteuerbaren Drehantrieben. Der Scanner 16 ist damit nicht nur geeignet, die Probe in dem Lichtmikroskop 4 wie gewünscht abzutasten, sondern auch alle Fehlausrichtungen zwischen dem Scannerkopf 1 und dem Lichtmikroskop 4 zu kompensieren. So kann der Scannerkopf 1 mit unterschiedlichen Lichtmikroskopen 4 verwendet werden, ohne dass konstruktive Änderungen an dem Scannerkopf 1 vorgenommen werden müssen. Der Scanner 16, d. h. die Drehantriebe seiner Drehspiegel, werden von einer hier nicht dargestellten externen Steuerung angesteuert. Dazu ist der Scanner 16 über ein Steuerkabel 17 an die externe Steuerung angeschlossen, für das ein Steuerkabelanschluss 18 an dem Scannerkopf 1 vorgesehen ist. Das von der jeweiligen Probe emittierte und aus dem Lichtmikroskop 4 austretende Fluoreszenzlicht 11 wird von dem Strahlengang des Lichts 10, d. h. dem Lichtstrahl 15, mit Hilfe eines dichroitischen Spiegel 19 als Ablenkmittel 20 abgetrennt und mit einem Vollspiegel 21 parallel zu dem Lichtstrahl 15 ausgerichtet, um mit einer weiteren Kopplungslinse 22 in die Multimode-Lichtleiterfaser 9 eingekoppelt zu werden. Da die Ablenkmittel 20 von dem Lichtmikroskop 4 aus gesehen hinter dem Scanner 16 angeordnet sind, entscannt der Scanner 16 das Fluoreszenzlicht 11, das daher hinter dem Scanner 16 immer eine gleiche Richtung aufweist, in der es in die Multimode-Lichtleiterfaser 9 gelangt. Aufgrund der parallelen Ausrichtung des Fluoreszenzlichts 11 zu dem Lichtstrahl 15 sind die Lichtleiteranschlüsse 6 und 8 nebeneinander auf der den ersten Anschlusseinrichtungen 2 abgekehrten Seite des Scannerkopfs 1 angeordnet. Die ersten Anschlusseinrichtungen 2 und die zweiten Anschlusseinrichtungen 5 sowie der Steuerkabelanschluss 18 sind an und alle weiteren Bestandteile des Scannerkopfs 1 in einem Gehäuse 23 des Scannerkopfs 1 angeordnet, an dem auch eine etwaige zusätzliche tragende Struktur dieser weiteren Bestandteile fixiert ist oder umgekehrt das Gehäuse an dieser tragenden Struktur. Der gesamte Scannerkopf 1 weist eine typische Länge in Richtung der optischen Achse des Anschlusses 3 von 2 dm und einen maximalen Durchmesser orthogonal zu der optischen Achse von 1 ½ dm auf. Sein typisches Gewicht beträgt 2 kg. Bei vertikaler Ausrichtung der optischen Achse ist der Scannerkopf 1 typischerweise ausschließlich an dem Anschluss 3 gelagert und nicht zusätzlich abgestützt.

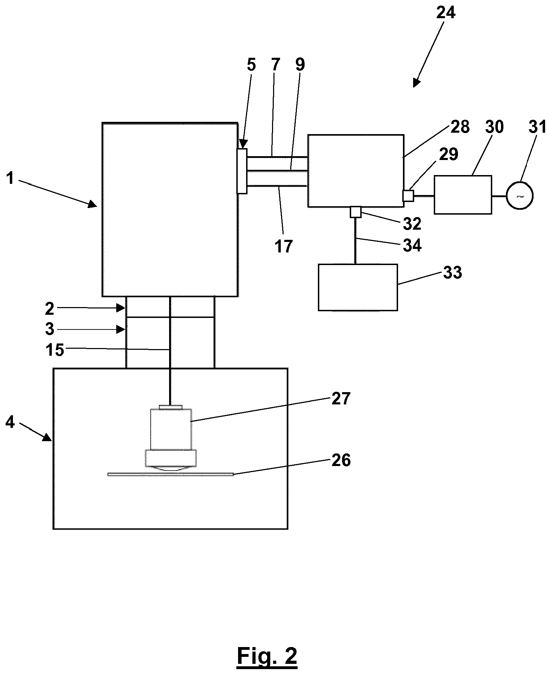

**Fig. 2** zeigt eine gegenüber Fig. 1 modifizierte Ausführungsform des Scannerkopfs 1 als Teil einer Vorrichtung 24, mit der das Lichtmikroskop 4 zu einem hochauflösenden Scanning-Fluoreszenzmikroskop 25 aufgerüstet wird. Dabei sind in dem Lichtmikroskop 4 schematisch eine zu untersuchende Probe 26 und ein Objektiv 27 des Lichtmikroskops 4 dargestellt, mit dem der Lichtstahl 15 in die Probe 26 fokussiert wird. Für das Abtasten der Probe 16 mit dem fokussierten Lichtstrahl 15 und das Formen des Lichts zu dem Lichtstrahl 15 mit den gewünschten Lichtintensitätsverteilungen im Fokus des Objektivs 27 ist der Scannerkopf 1 vorgesehen. Der Scannerkopf 1 nutzt ausschließlich das Objektiv 27 des Lichtmikroskops 4 und die Halterung für die Probe 26. Von einem etwaigen eigenen Scanner des Lichtmikroskops 4 macht die Vorrichtung 24 keinen Gebrauch; der Scannerkopf 1 liegt nicht im gescannten Strahlengang eines solchen eigenen Scanners des Lichtmikroskops 4. Die zweiten Anschlusseinrichtungen 5 des Scannerkopfs 1 sind hier auch zum Anschluss des Steuerkabels 17 vorgesehen. Das Steuerkabel 17 führt dabei wie die Singlemode-Lichtleiterfaser 7 und die Multimode-Lichtleiterfaser 9 zu einer Basiseinheit 28, in der die Lichtquelle, die das Licht 10 gemäß Fig. 1 in die Single-mode-Lichtleiterfaser 7 einspeist, der Detektor, der das in die Multimode-Lichtleiterfaser 9 eingespeiste Fluoreszenzlicht 11 gemäß Fig. 1 detektiert, und die externe Steuerung, die die Drehantriebe der Drehspiegel des Scanners 16 gemäß Fig. 1 ansteuert, angeordnet sind. Die Basiseinheit 28 wird über einen Versorgungsanschluss 29 von einem Netzteil 30 mit einer Versorgungsniederspannung versorgt. Das Netzteil 30 speist sich aus einem Wechselstromnetz 31 lokalen Standards, an das ausschließlich das Netzteil 30 angepasst ist. Zudem ist das Netzteil 30 an den Leistungsbedarf der Basiseinheit 28 angepasst; ansonsten ist es ein unspezifisches Standardbauteil. Die Basiseinheit 28 weist weiterhin einen Kommunikationsanschluss 32 zum Anschließen eines Steuerrechners 33 über ein Kommunikationskabel 34 beispielsweise nach USB-Standard auf. Die Lichtquelle, die Teil der Basiseinheit 28 ist, umfasst mindestens zwei Laser, die Licht bei unterschiedlichen Wellenlängen emittieren und deren Licht zu dem Licht 10 gemäß Fig. 1 zusammengeführt wird, das dem Scannerkopf 1 über die die Singlemode-Lichtleiterfaser 7 zugeführt wird. Der Detektor kann grundsätzlich auch mehrere, selektiv für verschiedene Wellenlängen des Fluoreszenzlichts 11 gemäß Fig. 1 empfindliche Detektoreinheiten umfassen oder beispielsweise mit einem auswechselbaren Farbfilter oder einem Filterrad auf eine bestimmte Wellenlänge des Fluoreszenzlichts 11 abstimmbar sein.

Wenn in Fig. 2 die zweiten Anschlusseinrichtungen 5 des Scannerkopfs 1 gemäß Fig. 2 nicht auf der den ersten Anschlusseinrichtungen 2 gegenüberliegenden Seite des Scannerkopfs 1 vorgesehen sind, kann dies der schematischen Darstellung von Fig. 2 geschuldet sein. Grundsätzlich können die zweiten Anschlusseinrichtungen, beispielsweise mit Hilfe von in dem Scannerkopf 1 verlaufenden Lichtleitern, an jeder Seite des Scannerkopfs 1 angeordnet werden. Bevorzugt ist jedoch eine Anordnung auf der den Anschlusseinrichtungen 2 gegenüberliegenden Seite des Scannerkopfs, um den inneren Aufbau des Scannerkopfs 1 möglichst einfach zu halten.

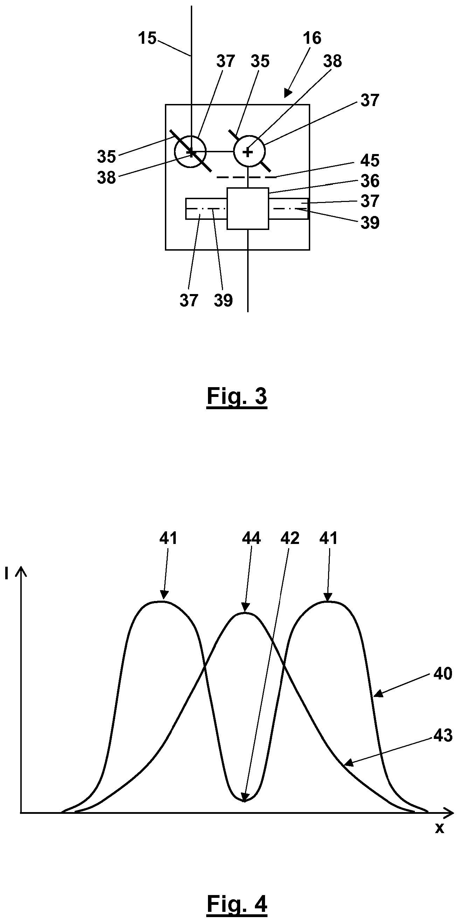

**Fig. 3** zeigt eine bevorzugte Ausführungsform des Scanners 16 gemäß Fig. 1. Der Scanner 16 weist zwei Paare von Drehspiegeln 35 und 36 auf, die mit Drehantrieben 37 unabhängig voneinander um paarweise parallele Schwenkachsen 38 und 39 verschwenkbar sind. Die Paare der Drehspiegel 35 und 36 sind um eine Ebene 45 herum angeordnet, auf die nach der Definition des Anschlusses 3 gemäß den Fig. 1 und 2 eine Bildebene des Objektivs 27 des Lichtmikroskops 4 fällt. Jedes Paar von Drehspiegeln 35 bzw. 36 ist für das Abtasten der Probe 26 gemäß Fig. 2 in einer Richtung orthogonal zu der optischen Achse des Objektivs 27 vorgesehen. Durch die Verwendung von zwei Drehspiegeln 35 bzw. 36 je Abtastrichtung kann nicht nur der Ablenkwinkel des Lichtstrahls 15 mit dem Scanner 16 in der jeweiligen Richtung vorgegeben werden, sondern auch der Durchtrittspunkt durch eine Pupille des Objektivs 27 des Lichtmikroskops 4. Dies ist Voraussetzung dafür, um die gewünschten Lichtintensitätsverteilungen im Fokus des Objektivs 27 insbesondere im Hinblick auf das Fluoreszenzverhinderungslicht zu erreichen, das möglichst zentral durch die Pupille des Objektivs 27 hindurchtreten muss.

**Fig. 4** stellt diese Lichtintensitätsverteilungen in einem Schnitt durch den Fokus, d. h. die Fokalebene des Objektivs 27 gemäß Fig. 2 dar. Das Fluoreszenzverhinderungslicht 40 weist dort, wo das Anregungslicht 43 sein Intensitätsmaximum 44 hat, ein von Intensitätsmaxima 41 umgebenes Intensitätsminimum 42 auf. Im Idealfall ist das Intensitätsminimum 42 eine Nullstelle der Intensitätsverteilung des Fluoreszenzverhinderungslichts 40. Das von Fluorophoren in der Probe 26 gemäß Fig. 2 emittierte Fluoreszenzlicht stammt daher ausschließlich aus einem Bereich um das Intensitätsminimum 42, in dem die Intensität des Fluoreszenzverhinderungslichts 40 nicht so hoch ist, dass sie die Fluoreszenz der Fluorophore verhindert. Überall außerhalb dieses Bereichs liegt die Intensität des Fluoreszenzverhinderungslichts 40 über einer Sättigungsgrenze der Fluoreszenzverhinderung.

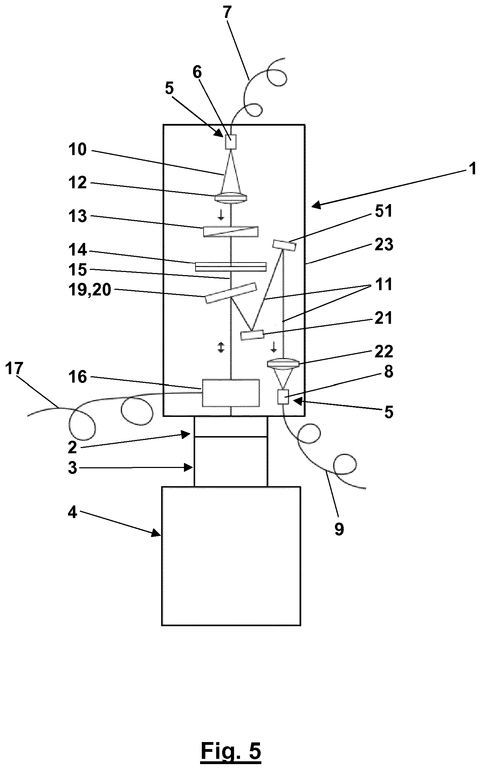

Bei der Ausführungsform des Scannerkopfs 1 gemäß **Fig. 5** ist der Lichtleiteranschluss 8 für das Fluoreszenzlicht 11 nicht parallel zu dem Lichtleiteranschluss 6 für das Licht 10 von der Lichtquelle vorgesehen, sondern antiparallel dazu, d. h. an derselben Seite des Scannerkopfs 1 wie der Anschluss 3. Zu diesem Zweck ist im Strahlengang des Fluoreszenzlichts 11 ein zusätzlicher Vollspiegel 51 angeordnet. Weiterhin sind die Lichtleiteranschlüsse 6 und 8 hier ebenso wie der Steuerkabelanschluss 18 innerhalb des Gehäuses 23 angeordnet, in dem Durchtrittsöffnungen für die Lichtleiterfasern 7 und 9 und das Steuerkabel 17 vorgesehen sind.

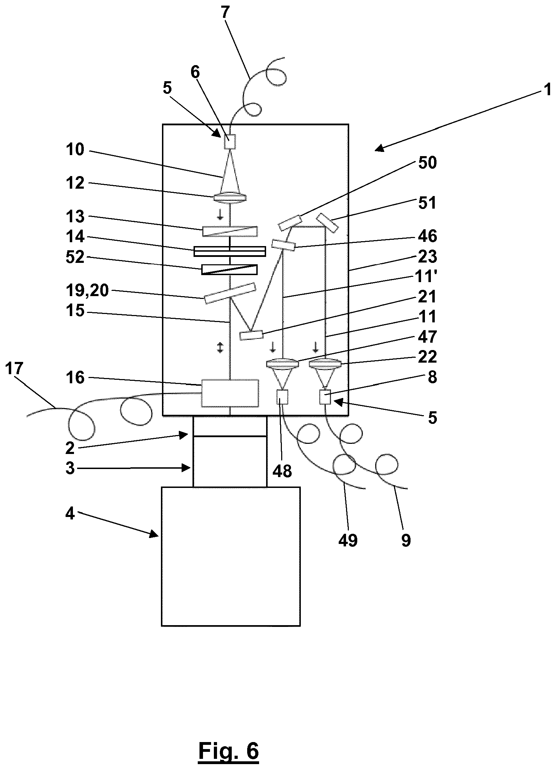

Bei der Ausführungsform des Scannerkopfs 1 gemäß **Fig. 6** ist eine doppelbrechende Platte 52 zwischen der Phasenplatte 14 und dem Ablenkmittel 20 angeordnet. In einer Standardausrichtung ist die doppelbrechende Platte so ausgerichtet, dass sich ihre schnelle Achse parallel zu dem Lichtstrahl 15 erstreckt. Auf diese Weise kann der zirkular polarisierte Lichtstrahl 15 die doppelbrechende Platte 52 passieren, ohne von ihr beeinflusst zu werden. Die doppelbrechende Platte 52 kann aber auch gezielt verkippt werden, beispielsweise mittels Stellschrauben, die hier nicht dargestellt sind. Durch das Verkippen der doppelbrechenden Platte 52 wird die Polarisation des Lichtstrahls 15 beeinflusst. Das Verkippen der doppelbrechenden Platte 52 und die daraus resultierende Beeinflussung der Polarisation des Lichtstrahls 15 können genau so gewählt werden, dass dadurch eine Beeinflussung oder Verschiebung der Polarisation des Lichtstrahls 15, die durch die nachfolgenden optischen Elemente, insbesondere des Lichtmikroskops 4, verursacht wird, vorkompensiert wird. In dieser Weise kann die doppelbrechende Platte dafür genutzt werden, die Polarisation des Lichtstrahls 15 genauso zu beeinflussen oder zu verzerren, dass Fehler, Unvollkommenheiten oder allgemein polarisationsändernde Eigenschaften der nachfolgenden optischen Elemente vorweggenommen, d. h. vorweg ausgeglichen werden, sodass der Lichtstrahl 15 nach dem Durchlaufen der optischen Elemente wieder zirkular polarisiert ist (statt aufgrund der Fehler, Unvollkommenheiten oder polarisationsändernden Eigenschaften beispielsweise elliptisch polarisiert zu werden).

Als weitere Variation zu den Ausführungsformen der Fig. 1 und 5 wird aus dem Strahlengang von dem dichroitischen Spiegel 19 zu dem Lichtleiteranschluss 8 ein Teil 11' des Fluoreszenzlichts mit Hilfe eines weiteren dichroitischen Spiegels 46 zu einer zusätzlichen Kopplungslinse 47 abgelenkt, die es in eine zusätzliche Multimode-Lichtleiterfaser 49 einkoppelt. Für die zusätzliche Multimode-Lichtleiterfaser 49 ist ein zusätzlicher Lichtleiteranschluss 48 vorgesehen. Der Rest des Fluoreszenzlichts 11 wird über einen zusätzlichen Vollspiegel 50 und den Vollspiegel 51 der weiteren Kopplungslinse 22 zugeführt. Die dichroitischen Spiegel 19 und 46 sind bezüglich ihrer Reflektions- bzw. Transmissionsbänder so aufeinander abgestimmt, dass Fluoreszenzlicht 11 unterschiedlicher Wellenlänge von unterschiedlichen Fluorophoren in der jeweiligen Probe getrennt in die beiden Multimode-Lichtleiterfasern 9 und 49 eingekoppelt wird und so getrennten Detektoreinheiten des Detektors für das Fluoreszenzlicht zugeführt werden kann.

### BEZUGSZEICHENLISTE

- 1: Scannerkopf
- 2: erste Anschlusseinrichtungen
- 3: Anschluss
- 4: Lichtmikroskop
- 5: zweite Anschlusseinrichtungen
- 6: Lichtleiteranschluss
- 7: polarisationserhaltende Singlemode-Lichtleiterfaser
- 8: Lichtleiteranschluss
- 9: Multimode-Lichtleiterfaser
- 10: Licht
- 11: Fluoreszenzlicht
- 11': Teil des Fluoreszenzlichts
- 12: Kopplungslinse
- 13: λ/4-Platte
- 14: Phasenplatte
- 15: Lichtstrahl
- 16: Scanner
- 17: Steuerkabel
- 18: Steuerkabelanschluss
- 19: dichroitischer Spiegel
- 20: Ablenkmittel
- 21: Vollspiegel
- 22: weitere Kopplungslinse
- 23: Gehäuse
- 24: Vorrichtung
- 25: hochauflösendes Scanning-Fluoreszenzmikroskop
- 26: Probe
- 27: Objektiv
- 28: Basiseinheit
- 29: Versorgungsanschluss
- 30: Netzteil
- 31: Netz
- 32: Kommunikationsanschluss
- 33: Steuerrechner
- 34: Kommunikationskabel
- 35: Drehspiegel
- 36: Drehspiegel
- 37: Drehantrieb
- 38: Schwenkachse
- 39: Schwenkachse
- 40: Fluoreszenzverhinderungslicht
- 41: Intensitätsmaximum
- 41: Intensitätsmaximum
- 42: Intensitätsminimum
- 43: Anregungslicht
- 44: Intensitätsmaximum
- 45: Ebene
- 46: dichroitischer Spiegel
- 47: zusätzliche Kopplungslinse
- 48: zusätzlicher Lichtleiteranschluss
- 49: zusätzliche Multimode-Lichtleiterfaser
- 50: zusätzlicher Vollspiegel
- 51: Vollspiegel
- 52: doppelbrechende Platte

## Patentansprüche

1. Scannerkopf (1) für hochauflösende Scanning-Fluoreszenzmikroskopie mit
- einem Gehäuse (23),
- ersten Anschlusseinrichtungen (2) an oder in dem Gehäuse (23), die zum Anschließen des Scannerkopfs (1) an ein Lichtmikroskop (4) ausgebildet sind,
- zweiten Anschlusseinrichtungen (5) an oder in dem Gehäuse (23), die zum Anschließen des Scannerkopfs (1) über Lichtleiterfasern (7, 9) an eine externe Lichtquelle und einen externen Detektor für Fluoreszenzlicht (11) ausgebildet sind,
- Strahlformungseinrichtungen (12 bis 14), die zwischen den zweiten Anschlusseinrichtungen (5) und den ersten Anschlusseinrichtungen (2) angeordnet und zum Formen eines Lichtstrahls (15) aus Licht (10) von der externen Lichtquelle ausgebildet sind, und
- Drehspiegeln (35, 36), die zwischen den Strahlformungseinrichtungen (12 bis 14) und den ersten Anschlusseinrichtungen (2) angeordnet und zum derartigen Ablenken des Lichtstrahls (15) um unterschiedliche Ablenkwinkel ausgebildet sind, dass eine Probe (26) mit dem von dem Lichtmikroskop (4) fokussierten Lichtstrahl (15) in zwei verschiedenen Richtungen abgetastet wird, wobei Fluoreszenzlicht (11) von der Probe (26) zurück zu den zweiten Anschlusseinrichtungen (5) geführt wird,
- wobei die Strahlformungseinrichtungen und die Drehspiegel von dem Gehäuse (23) umschlossen sind,
**dadurch gekennzeichnet,**
- **dass** die ersten Anschlusseinrichtungen (2) zum Anschließen des Scannerkopfs (1) an einen Kameraanschluss oder an einen anderen vollkorrigierten und/oder normierten Anschluss (3) des Lichtmikroskops (4), gegenüber dem ein Zwischenbild des Lichtmikroskops (4) eine definierte Lage aufweist, und zur ortsfesten Lagerung des Scannerkopfs (1) an dem Anschluss (3) des Lichtmikroskops (4) ausgebildet sind,
- **dass** die zweiten Anschlusseinrichtungen (5) getrennte Lichtleiteranschlüsse (6, 8) für das Licht (10) von der Lichtquelle und das Fluoreszenzlicht (11) zu dem Detektor umfassen,
- **dass** Ablenkmittel (20) zwischen den Drehspiegeln (35, 36) und dem Lichtleiteranschluss (6) für das Licht (10) von der Lichtquelle angeordnet und ausgebildet sind, um das Fluoreszenzlicht (11) zu dem Lichtleiteranschluss (8) für das Fluoreszenzlicht (11) abzulenken,
- **dass** die Strahlformungseinrichtungen (12 bis 14) eine Strahlformungsanordnung mit einem gemeinsamen Lichtpfad für zwei Teile des Lichts (10) von der Lichtquelle umfassen, die den einen Teil des Lichts (10) von der Lichtquelle so formt, dass er im Fokus des Lichtmikroskops (4) ein von Intensitätsmaxima (41) umgebenes Intensitätsminimum (42) aufweist, während sie den anderen Teil des Lichts (10) von der Lichtquelle so formt, dass er im Fokus des Lichtmikroskops (4) am Ort des Intensitätsminimums (42) des einen Teils des Lichts (10) von der Lichtquelle ein Intensitätsmaximum (44) aufweist, und
**dass** je Richtung, in der die Probe (26) abgetastet wird, zwei Drehspiegel (35, 36) mit jeweils einem Drehantrieb (37) vorhanden sind, wobei die beiden Drehantriebe (37) unabhängig voneinander ansteuerbar sind, um die beiden Drehspiegel (35, 36) zu verschwenken.

2. Scannerkopf (1) nach Anspruch 1, **dadurch gekennzeichnet, dass** in dem Scannerkopf (1) keine getrennten Lichtpfade für den einen und den anderen Teil des Lichts (10) von der Lichtquelle vorhanden sind.

3. Scannerkopf (1) nach Anspruch 1 oder 2, **dadurch gekennzeichnet, dass** die ersten Anschlusseinrichtungen (2) zur derart ortsfesten Lagerung des Scannerkopfs (1) an dem Anschluss (3) des Lichtmikroskops (4) ausgebildet sind, dass der Scannerkopf (1) ohne zusätzliche Abstützungen außer derjenigen an dem Anschluss auskommt.

4. Scannerkopf (1) nach einem der vorhergehenden Ansprüche, **dadurch gekennzeichnet, dass** der Lichtleiteranschluss (6) für das Licht (10) von der Lichtquelle an einer den ersten Anschlusseinrichtungen (2) gegenüberliegenden Seite des Scannerkopfs (1) angeordnet ist, während der Lichtleiteranschluss (8) für das Fluoreszenzlicht (11) zu dem Detektor parallel dazu an der den ersten Anschlusseinrichtungen (2) gegenüberliegenden Seite des Scannerkopfs (1) oder antiparallel dazu an derselben Seite des Scannerkopfs (1) wie die ersten Anschlusseinrichtungen (2) angeordnet ist.

5. Scannerkopf (1) nach einem der vorhergehenden Ansprüche, **dadurch gekennzeichnet, dass** eine doppelbrechende Platte (52) zwischen einer der Strahlformungseinrichtungen (12 bis 14) und dem Ablenkmittel (20) so angeordnet ist, dass die doppelbrechende Platte (52) in einer Standardausrichtung so ausgerichtet ist, dass ihre schnelle Achse parallel zu dem Lichtstrahl (15) ist, wobei die doppelbrechende Platte (52) aus ihrer Standardausrichtung heraus kippbar ist.

6. Scannerkopf (1) nach einem der vorhergehenden Ansprüche, **dadurch gekennzeichnet, dass** seine maximale Abmessungen in Richtung der optischen Achse des Anschlusses (3) und senkrecht dazu nicht mehr als 25 cm betragen und seine Masse nicht mehr als 1,5 kg beträgt.

7. Scannerkopf (1) nach einem der vorhergehenden Ansprüche, **dadurch gekennzeichnet, dass** ein Steuerkabelanschluss (18) für ein Steuerkabel (17) zum Anschließen der Drehantriebe (37) der Drehspiegel (35, 36) an eine externe Steuerung vorgesehen ist.

8. Vorrichtung (24) zum Aufrüsten eines Lichtmikroskops (4) zu einem hochauflösenden Scanning-Fluoreszenzmikroskop (25) mit
- einem Scannerkopf (1) nach einem der vorhergehenden Ansprüche,
- einer Basiseinheit (28), die eine das Licht bereitstellende Lichtquelle, einen Detektor für das Fluoreszenzlicht und eine Steuerung zur Ansteuerung der Drehantriebe (37) der Drehspiegel (35, 36) umfasst,
- einem von der Lichtquelle zu dem Lichtleiteranschluss (6) des Scannerkopfs (1) für das Licht (10) von der Lichtquelle führenden Lichtleiter,
- einem von dem Lichtleiteranschluss (8) für das Fluoreszenzlicht (11) zu dem Detektor führenden Lichtleiter und
- einem von der Steuerung zu den Drehantrieben (37) der Drehspiegel (35, 36) führenden Steuerkabel (17).

9. Vorrichtung (24) nach Anspruch 8, **dadurch gekennzeichnet, dass** der von der Basiseinheit (28) zu dem Lichtleiteranschluss (6) des Scannerkopfs (1) für das Licht (10) von der Lichtquelle führende Lichtleiter eine Singlemode-Lichtleiterfaser (7) aufweist und dass der von dem Lichtleiteranschluss (8) für das Fluoreszenzlicht (11) zu der Basiseinheit (28) führende Lichtleiter mindestens eine Multimode-Lichtleiterfaser (9) aufweist.

10. Vorrichtung (24) nach Anspruch 8 oder 9, **dadurch gekennzeichnet, dass** die Basiseinheit (28) einen Versorgungsanschluss (29) zum Zuführen einer Versorgungsniederspannung und/oder einen Kommunikationsanschluss (32) zum Anschließen an einen Steuerrechner (33) aufweist.

11. Vorrichtung (24) nach einem der Ansprüche 8 bis 10, **dadurch gekennzeichnet, dass** ein durch Ansteuern eines Aktuator höhenveränderbarer Probenhalter vorhanden ist, wobei der Aktuator über ein weiteres Steuerkabel an eine weitere Steuerung in der Basiseinheit angeschlossen ist.

12. Hochauflösendes Scanning-Fluoreszenzmikroskop (25) mit
- einem Lichtmikroskop (4) mit einem Anschluss (3) mit definierter Lage eines Zwischenbilds des Lichtmikroskops (4),
- einem Scannerkopf (1) nach einem der Ansprüche 1 bis 6, dessen erste Anschlusseinrichtungen (2) an den Anschluss (3) des Lichtmikroskops (4) angeschlossen sind,
- einer das Licht bereitstellenden Lichtquelle,
- einem Detektor für das Fluoreszenzlicht,
- einer Steuerung zur Ansteuerung der Drehantriebe (37) der Drehspiegel (35, 36),
- einem von der Lichtquelle zu dem Lichtleiteranschluss (6) des Scannerkopfs (1) für das Licht (10) von der Lichtquelle führenden Lichtleiter,
- einem von dem Lichtleiteranschluss (8) für das Fluoreszenzlicht (11) zu dem Detektor führenden Lichtleiter und
- einem von der Steuerung zu den Drehantrieben (37) der Drehspiegel (35, 36) führenden Steuerkabel (17).

13. Scanning-Fluoreszenzmikroskop (25) nach Anspruch 12, **dadurch gekennzeichnet, dass** die Drehspiegel (35, 36) um eine Ebene (45) herum angeordnet sind, auf die das Zwischenbild des Lichtmikroskops (4) fällt.

14. Scanning-Fluoreszenzmikroskop (25) nach Anspruch 12 oder 13, **dadurch gekennzeichnet, dass** an den Lichtleiteranschluss (6) für das Licht (10) von der Lichtquelle eine polarisationserhaltende Singlemode-Lichtleiterfaser (7) und an den Lichtleiteranschluss (8) für das Fluoreszenzlicht (11) mindestens eine Multimode-Lichtleiterfaser (9) angeschlossen ist.

15. Vorrichtung (24) nach einem der Ansprüche 8 bis 11 oder Scanning-Fluoreszenzmikroskop (25) nach einem der Ansprüche 12 bis 14, **dadurch gekennzeichnet, dass** die Lichtquelle mindestens zwei Laser aufweist, die bei unterschiedlichen Wellenlängen emittieren.

## Claims

1. Scanner head (1) for high resolution scanning fluorescence microscopy comprising
- a housing (23),
- first connection appliances (2) at or in the housing (23), which are configured for connecting the scanner head (1) to a light microscope (4),
- second connection appliances (5) at or in the housing (23), which are configured for connecting the scanner head (1) via light guide fibres (7, 9) to an external light source and an external detector for fluorescence light (11),
- beam shaping appliances (12 to 14) which are arranged between the second connection appliances (5) and the first connection appliances (2) and which are configured for shaping a light beam (15) of light (10) from the external light source, and
- tilting mirrors (35, 36) which are arranged between the beam shaping appliances (12 to 14) and the first connection appliances (2) and which are configured for deflecting the light beam (15) by different deflection angles in such a way that a sample (26) is scanned with the light beam (15) focussed by the light microscope (4) in two different directions, wherein fluorescence light (11) from the sample (26) is guided back to the second connection appliances (5),
- wherein the beam shaping appliances and the tilting mirrors are enclosed by the housing (23),
**characterised in**
- **that** the first connection appliances (2) are configured for connecting the scanner head (1) to a camera mount or another fully corrected and/or standardized mount (3) of the light microscope (4), with regard to which an intermediate image of the light microscope (4) has a defined position, and for mounting the scanner head (1) to the mount (3) of the light microscope (4) in a fixed position,
- **that** the second connection appliances (5) include separate light guide ports (6, 8) for the light (10) from the light source and the fluorescence light (11) to the detector,
- **that** deflection means (20) are arranged between the tilting mirrors (35, 36) and the light guide port (6) for the light (10) to the light source and configured to deflect the fluorescence light (11) towards the light guide port (8) for the fluorescence light (11),
- **that** the beam shaping appliances (12 to 14) include a beam shaping arrangement with a common light path for two parts of the light (10) from the light source, which shapes the one part of the light (10) from the light source such that it comprises an intensity minimum (42) surrounded by intensity maxima (41) in the focus of the light microscope (4), whereas it shapes the other part of the light (10) from the light source such that it comprises an intensity maximum (44) at the position of the intensity minimum (42) of the one part of the light (10) from the light source in the focus of the light microscope (4), and
- **that** two tilting mirrors (35, 36) each with a tilting drive (37) are provided per each direction in which the sample (26) is scanned, wherein the two tilting drives (37) are independently controllable to tilt the two tilting mirrors (35, 36).

2. Scanner head (1) of claim 1, **characterised in that** no separate light paths for the one and the other part of the light (10) from the source are present in the scanner head (1).

3. Scanner head (1) of claim 1 or 2, **characterised in that** the first connection appliances (2) are configured for mounting the scanner head (1) to the mount (3) of the light microscope (4) in such a fixed way that the scanner head (1) does without an additional support except of that one at the mount.

4. Scanner head (1) of any of the preceding claims, **characterised in that** the light guide port (6) for the light (10) from the light source is arranged at a side of the scanner head 1 opposite to the first connection appliances (2), whereas the light guide port (8) for the fluorescence light (11) is arranged in parallel thereto at the side of the scanner head (1) opposite to the first connection appliances (2), or anti-parallel thereto at the same side of the scanner head (1) as the first connection appliances (2).

5. Scanner head (1) of any of the preceding claims, **characterised in that** a birefringent plate (52) is arranged between one of the beam shaping appliances (12 to 14) and the deflection means (20) in such a way that the birefringent plate (52) is oriented in a standard orientation such that its fast axis is parallel to the light beam (15), wherein the birefringent plate (52) can be tilted out of its standard orientation.

6. Scanner head (1) of any of the preceding claims, **characterised in that** its maximum dimensions in direction of the optical axis of the mount (3) and orthogonal thereto are not more than 25 cm and its mass is not more than 1.5 kg.

7. Scanner head (1) of any of the preceding claims, **characterised in that** a control cable port (18) is provided for a control cable (17) for connecting the tilting drives (37) of the tilting mirrors (35, 36) to an external controller.

8. Device (24) for upgrading a light microscope (4) to a high-resolution scanning fluorescence microscope (25) comprising
- a scanner head (1) according to any of the preceding claims,
- a base unit (28) which includes a light source providing the light, a detector for the fluorescence light and a controller for controlling the tilting drives (37) of the tilting mirrors (35, 36),
- a light guide leading from the light source to the light guide port (6) of the scanner head (1) for the light (10) from the light source,
- a light guide leading from the light guide port (8) for the fluorescence light (11) to the detector, and
- a control cable (17) leading from the controller to the tilting drives (37) of the tilting mirrors (35, 36).

9. Device (24) of claim 8, **characterised in that** the light guide leading from the base unit (28) to the light guide port (6) of the scanner head (1) for the light (10) from the light source comprises a single-mode light guide fibre (7), and that the light guide leading from the light guide port (8) for the fluorescence light (11) to the base unit (28) comprises at least one multi-mode light guide fibre.

10. Device (24) of claim 8 or 9, **characterised in that** the base unit (28) has a supply port (29) for providing a supply low voltage and/or a communication port (52) for connection to a control computer (33).

11. Device (24) of any of the claims 8 to 10, **characterised in that** a sample holder is provided which can be varied in height by operating an actuator, wherein the actuator is connected to a further controller in the base unit via a further control cable.

12. High-resolution scanning fluorescence microscope (25) comprising
- a light microscope (4) comprising a mount (3) having a defined position of an intermediate image of the light microscope (4),
- a scanner head (1) of any of the claims 1 to 6 whose first connection appliances (2) are connected to the mount (3) of the light microscope (4),
- a light source providing the light,
- a detector for the fluorescence light,
- a controller for controlling the tilting drives (37) of the tilting mirrors (35, 36),
- a light guide leading from the light source to the light guide port (6) of the scanner head (1) for the light (10) from the light source,
- a light guide leading from the light guide port (8) for the fluorescence light (11) to the detector, and
- a control cable leading from the controller to the tilting drives (37) of the tilting mirrors (35, 36).

13. Scanning-fluorescence microscope (25) of claim 12, **characterised in that** the tilting mirrors (35, 36) are arranged around a plane (45) onto which the intermediate image of the light microscope (4) falls.

14. Scanning-fluorescence microscope (25) of claim 12 or 13, **characterised in that** a polarization-conserving single-mode light guide fibre is connected to the light guide port (6) for the light (10) from the light source, and at least one multi-mode light guide fibre (9) is connected to the light guide port (8) for the fluorescence light (11).

15. Device (24) of any of the claims 8 to 11 or scanning-fluorescence microscope (25) of any of the claims 12 to 14, **characterised in that** the light source comprises at least two lasers which emit at different wave lengths.

## Revendications

1. Tête de balayage (1) pour microscopie à fluorescence à balayage avec
- un boîtier (23),
- des premiers dispositifs de raccordement (2), sur ou dans le boîtier (23), qui sont conçus pour le raccordement de la tête de balayage (1) à un microscope optique (4),
- des deuxièmes dispositifs de raccordement (5), sur ou dans le boîtier (23), qui sont conçus pour le raccordement de la tête de balayage (1) par l'intermédiaire de fibres optiques (7, 9) à une source de lumière externe et un détecteur externe pour la lumière fluorescente (11),
- des dispositifs de formation de faisceaux (12 à 14) qui sont disposés entre les deuxièmes dispositifs de raccordement (5) et les premiers dispositifs de raccordement (2) et qui sont conçus pour la formation d'un faisceau lumineux (15) à partir de la lumière (10) provenant de la source de lumière externe et
- des miroirs rotatifs (35, 36) qui sont disposés entre les dispositifs de formation de faisceaux (12 à 14) et les premiers dispositifs de raccordement (2) et qui sont conçus pour la déviation du faisceau lumineux (15) de différents angles de déviation, de façon à ce qu'un échantillon (26) est balayé avec le faisceau lumineux (15) focalisé par le microscope optique (4) dans deux directions différentes, dans laquelle la lumière fluorescente (11) est guidée par l'échantillon (26) à nouveau vers les deuxièmes dispositifs de raccordement (5),
- dans laquelle les dispositifs de formation de faisceaux et les miroirs rotatifs sont entourés par le boîtier (23),
**caractérisée en ce que**
- les premiers dispositifs de raccordement (2) sont conçus pour le raccordement de la tête de balayage (1) à un raccordement de caméra ou à un autre raccordement entièrement corrigé et/ou normalisé (3) du microscope optique (4), par rapport auquel une image intermédiaire du microscope optique (4) présente une position définie, et pour le montage fixe de la tête de balayage (1) sur le raccordement (3) du microscope optique (4),
- les deuxièmes dispositifs de raccordement (5) comprennent des raccordements de fibres optiques (6, 8) séparés pour la lumière (10) provenant de la source de lumière et pour la lumière fluorescente (11) vers le détecteur,
- des moyens de dérivation (20) sont disposés et réalisés entre les miroirs rotatifs (35, 36) et le raccordement de fibre optique (6) pour la lumière (10) provenant de la source de lumière, afin de dévier la lumière fluorescente (11) vers le raccordement de fibre optique (8) pour la lumière fluorescente (11),
- les dispositifs de formation de faisceaux (12 à 14) comprennent une disposition de formation de faisceaux avec un trajet commun pour deux parties de la lumière (10) provenant de la source de lumière, qui forme une partie de la lumière (10) provenant de la source de lumière de façon à ce qu'elle présente, au niveau du foyer du microscope optique (4), un minimum d'intensité (42) entouré de maxima d'intensité (41), tandis qu'elle forme l'autre partie de la lumière (10) provenant de la source de lumière de façon à ce qu'elle présente, au niveau du foyer du microscope optique (4), à l'endroit du minimum d'intensité (42) d'une partie de la lumière (10) provenant de la source de lumière, un maximum d'intensité (44) et
- dans chaque direction dans laquelle l'échantillon (26) est balayé, il existe deux miroirs rotatifs (35, 36) avec chacun un entraînement rotatif (37), dans laquelle les deux entraînements rotatifs (37) peuvent être contrôlés indépendamment l'un de l'autre afin de faire pivoter les deux miroirs rotatifs (35, 36).

2. Tête de balayage (1) selon la revendication 1, **caractérisée en ce que**, dans la tête de balayage (1) ne se trouve aucun trajet séparé pour l'une et l'autre partie de la lumière (10) provenant de la source de lumière.

3. Tête de balayage (1) selon la revendication 1 ou 2, **caractérisée en ce que** les premiers dispositifs de raccordement (2) sont conçus pour le montage fixe de la tête de balayage (1) sur le raccordement (3) du microscope optique (4) de façon à ce que la tête de balayage (1) arrive au raccordement sans appuis supplémentaires excepté celui sur le raccordement.

4. Tête de balayage (1) selon l'une des revendications précédentes, **caractérisée en ce que** le raccordement de fibre optique (6) pour la lumière (10) provenant de la source de lumière est disposé sur un côté de la tête de balayage (1) opposé aux premiers dispositifs de raccordement (2), tandis que le raccordement de fibre optique (8) pour la lumière fluorescente (11) vers le détecteur est disposé parallèlement à celui-ci sur le côté de la tête de balayage (1) opposé aux premiers dispositifs de raccordement (2) ou de manière antiparallèle à celui-ci sur le même côté de la tête de balayage (1) que les premiers dispositifs de raccordement (2).

5. Tête de balayage (1) selon l'une des revendications précédentes, **caractérisée en ce qu'**une plaque biréfringente (52) est disposée entre un des dispositifs de formation de faisceaux (12 à 14) et le moyen de déviation (20), de façon à ce que la plaque biréfringente (52) soit orientée dans une orientation standard, de sorte que son axe rapide soit parallèle au faisceau lumineux (15), dans laquelle la plaque biréfringente (52) peut être basculée hors de son orientation standard.

6. Tête de balayage (1) selon l'une des revendications précédentes, **caractérisée en ce que** ses dimensions maximales dans la direction de l'axe optique du raccordement (3) et perpendiculairement à celui-ci ne sont pas supérieures à 25 cm et sa masse n'est pas supérieure à 1,5 kg.

7. Tête de balayage (1) selon l'une des revendications précédentes, **caractérisée en ce qu'**un raccordement de câble de commande (18) pour un câble de commande (17) est prévu pour le raccordement des entraînements rotatifs (37) des miroirs rotatifs (35, 36) à une commande externe.

8. Dispositif (24) pour la transformation d'un microscope optique (4) en un microscope à fluorescence à balayage (25) avec
- une tête de balayage (1) selon l'une des revendications précédentes,
- une unité de base (28) qui comprend une source de lumière mettant la lumière à disposition, un détecteur pour la lumière fluorescente et une commande pour le contrôle des entraînements rotatifs (37) des miroirs rotatifs (35, 36),
- une fibre optique conduisant de la source de lumière vers le raccordement de fibre optique (6) de la tête de balayage (1) pour la lumière (10) provenant de la source de lumière,
- une fibre optique conduisant du raccordement de fibre optique (8) pour la lumière fluorescente (11) vers le détecteur et
- un câble de commande (17) conduisant de la commande vers les entraînements rotatifs (37) des miroirs rotatifs (35, 36).

9. Dispositif (24) selon la revendication 8, **caractérisé en ce que** la fibre optique conduisant de l'unité de base (28) vers le raccordement de fibre optique (6) de la tête de balayage (1) pour la lumière (10) provenant de la source de lumière comprend une fibre optique monomode (7) et **en ce que** la fibre optique conduisant du raccordement de fibre optique (8) pour la lumière fluorescente (11) vers l'unité de base (28) comprend au moins une fibre optique multimode (9).

10. Dispositif (24) selon la revendication 8 ou 9, **caractérisé en ce que** l'unité de base (28) comprend un raccordement d'alimentation (29) pour l'application d'une basse tension d'alimentation et/ou un raccordement de communication (32) pour le raccordement à un ordinateur de commande (33).

11. Dispositif (24) selon l'une des revendications 8 à 10, **caractérisé en ce qu'**un support d'échantillon, à hauteur réglable par le contrôle d'un actionneur, est présent, dans lequel l'actionneur est raccordé à une autre commande dans l'unité de base par l'intermédiaire d'un autre câble de commande.

12. Microscope à fluorescence à balayage à haute résolution (25) avec
- un microscope optique (4) avec un raccordement (3) avec une position définie d'une image intermédiaire du microscope optique (4),
- une tête de balayage (1) selon l'une des revendications 1 à 6, dont les premiers dispositifs de raccordement (2) sont raccordés au raccordement (3) du microscope optique (4),
- une source de lumière mettant la lumière à disposition,
- un détecteur pour la lumière fluorescente,
- une commande pour le contrôle des entraînements rotatifs (37) des miroirs rotatifs (35, 36),
- une fibre optique conduisant de la source de lumière au raccordement de fibre optique (6) de la tête de balayage (1) pour la lumière (10) provenant de la source de lumière,
- une fibre optique conduisant du raccordement de fibre optique (8) pour la lumière fluorescente (11) vers le détecteur et
- un câble de commande (17) conduisant de la commande vers les entraînements rotatifs (37) des miroirs rotatifs (35, 36).

13. Microscope à fluorescence à balayage (25) selon la revendication 12, **caractérisé en ce que** les miroirs rotatifs (35, 36) sont disposés autour d'un plan (45) sur lequel se trouve l'image intermédiaire du microscope optique (4).

14. Microscope à fluorescence à balayage (25) selon la revendication 12 ou 13, **caractérisé en ce que**, au raccordement de fibre optique (6) pour la lumière (10) provenant de la source de lumière est raccordée une fibre optique monomode conservant la polarisation (7) et, au raccordement de fibre optique (8) pour la lumière fluorescente (11) est raccordée au moins une fibre optique multimode (9).

15. Dispositif (24) selon l'une des revendications 8 à 11, ou microscope à fluorescence à balayage (25) selon l'une des revendications 12 à 14, **caractérisé en ce que** la source de lumière comprend au moins deux laser qui émettent à des longueurs différentes.
